# EUROPEAN PATENT SPECIFICATION

(11) **EP 2 902 262 B1**
(45) Date of publication and mention of the grant of the patent: **28.12.2016**
(21) Application number: 14153224.2
(22) Date of filing: 30.01.2014
(51) Int. Cl.: B60R 1/00, B60R 1/10

(54) **A camera arrangement, a system including a camera arrangement and a vehicle including a camera arrangement**
Kameraanordnung, System mit einer Kameraanordnung und Fahrzeug mit einer Kameraanordnung
Système de caméra, système comprenant un système de caméra et véhicule comprenant un système de caméra

(43) Date of publication of application: 05.08.2015
(73) Proprietor: Application Solutions (Electronics and Vision) Ltd., Lewes Sussex BN7 2AQ (GB)
(72) Inventor: Fey, Wolfgang, 88131 Bodolz (DE); Hantsch, Eric, Brighton, Sussex BN1 3RQ (GB); Mocek, Vaclav, Seaford, Sussex BN25 2PU (GB); Reade, Gideon, Worthing, Sussex BN13 3NG (GB); Saward, Ian, Lewes, Sussex BN7 1BH (GB); Uppara, Ravikanth, Seaford, East Sussex BN25 3ER (GB); Weller, Dave, Lewes, Sussex BN8 6DF (GB)
(74) Representative: Büchner, Jörg

(56) References cited:
- DE-A1-102007 012 993
- DE-A1-102008 001 680
- JP-A- 2011 020 669

## Description

The present invention relates to a camera arrangement, in particular a camera arrangement for a vehicle, and a system and a vehicle with at least one camera arrangement.

One or more cameras may be used to capture images of the environment around an object, for example the environment around a vehicle or a building. The camera may be mounted on the outside of the vehicle or building or may be positioned inside of the vehicle or building facing a window in order to capture images of the environment outside of the vehicle or building.

A camera on a vehicle may be used for detecting lanes on the road or detecting traffic signs or may provide the driver with a view of the vicinity of the vehicle. The view of the vicinity of the vehicle may be used to assist the driver when parking the vehicle or may improve safety as the driver is able to view areas which are screened from him in a normal driving position.

A camera on a vehicle may also be used to detect hazards or possible hazards from the captured image or images and then provide the driver with a warning or the information may be used in connection with driver assistance systems to actively take control of the vehicle and avoid the hazard.

WO 2009 147223 A2 discloses a camera arrangement for a motor vehicle which includes a camera which looks through the windshield of the vehicle. The windshield of a vehicle typically has a much flatter orientation compared to the side windows. This flatter orientation can cause refraction and distort an image captured by a camera facing the windshield. In WO 2009 147223 A2, the camera arrangement includes a prism arrangement introduced between the windshield and the camera lens for correcting colour errors efficiently.

DE 10 2008 001 680 A1 discloses a camera arrangement according to the preamble of claim 1, version "positioned on a second surface of the transparent pane that opposes the first surface".

DE 10 2007 012 993 A1 discloses a camera arrangement according to the preamble of claim 1, version "is integral with the transparent pane".

However, further improvements to camera arrangements suitable for use with motor vehicles are desirable.

An object of the invention is, therefore, to provide a camera arrangement which is suitable for use with a vehicle.

This object is solved by the subject matter of the independent claims. Further improvements are the subject matter of the dependent claims.

A camera arrangement is provided which includes a camera positioned adjacent a first surface of a transparent pane and a field of view modifying device which is positioned on a second surface of the transparent pane, or a field of view modifying device which is integral with the transparent pane. The second surface of the transparent pane opposes the first surface of the transparent pane.

The transparent pane may be a window pane, for example a window pane of a vehicle or a window pane of a building. The transparent pane may also be a cover of a light or lamp, for example, a cover of a light cluster of a vehicle. As used herein, transparent means optically transparent in a wavelength range visible to the human eye.

The field of view modifying device may be positioned on the second side of the transparent pane, for example, on the outside surface of a window of a vehicle or the outside surface of a cover of a light cluster. The field of view modifying device may also be mounted directly on the second surface of the transparent pane. Alternatively, the field of view modifying device may be integral with the transparent pane.

These two arrangements of the field of view modifying device enable the camera to be positioned on the opposing surface of the transparent pane, for example within the vehicle or the building. This avoids the need for mounting arrangements on the outside of the vehicle or building and means for routing one or more cables from the camera positioned outside of the vehicle to processing or display units positioned inside the vehicle.

Additionally, the field of view modifying device enables the camera to be mounted so that the objective lens of the camera is not directly facing the field of view which it is desired that the camera capture. This arrangement is useful for transparent panes which are not vertically orientated, such as the windshield of the vehicle. Therefore, the optical axis of the camera can be mounted at angles other than a perpendicular angle to the major plane of the transparent pane and capture an image from an area in front of the major plane of the transparent pane.

The camera may be an analogue or a digital camera and may be a video camera capturing images at a number of frames per second, for example 35 frames a second.

According to the invention, the field of view modifying device is a lens. The lens may be mounted on the second surface of the transparent pane, for example on the outside surface of the transparent pane of a vehicle.

Alternatively, the lens may be integral with the transparent pane. In one embodiment, a separate lens is co-moulded in the transparent pane. This arrangement may be produced when a plastic cover for a light cluster for a vehicle is manufactured, for example. The lens may also be provided by a protruding portion of the transparent pane, such as a lens-shaped protrusion, rather than being provided as a separate piece.

The lens may be a wide field of view lens in order that the camera can capture an image from a wider area. In some embodiments, the lens is a fisheye lens and may be either a 180° fisheye lens, in which the diagonal of the image captures 180°, or may be a circular fisheye lens in which the lens captures a 180° image vertically, horizontally and diagonally. In an embodiment, the fisheye lens captures a 190° image horizontally and 190° diagonally and less than 190° vertically.

Wide field of view lenses and fisheye lenses may be used for vehicles in which it is desirable to produce a top or a bird's eye view or a panoramic view of the entire environment around the vehicle. In these embodiments, four camera arrangements may be provided on the front, rear, left and right of the vehicle. Whilst all of the camera arrangements may have one or more embodiments of the camera arrangement described herein, combinations with camera arrangements having features other than those described herein may also be used.

In an embodiment, the camera has a camera optical axis and the field of view modifying device is aligned with or eccentric to the camera optical axis. In an embodiment, the camera has a camera optical axis and the lens has a lens optical axis. The lens optical axis may be aligned with or eccentric to the camera optical axis.

In embodiments in which the lens optical axis is aligned with the camera optical axis, the camera is typically facing the field of view which it is desired to capture. In embodiments in which the lens optical axis is aligned with the camera optical axis, the lens modifies the field of view by enabling a wider field of view to be captured by the camera as the lens is positioned on the second surface of the pane or is integral with the transparent pane.

In embodiments in which the field of view modifying device and/or the lens optical axis is eccentric to the camera optical axis, the camera may face a direction which does not allow it to capture the desired field of view. For example, a portion of the ground next to the vehicle may not be captured by the camera without the use of the additional lens.

The transparent pane may comprise glass or a plastic material. The plastic material may be a polymer. Typically, a cover or housing for a lamp or a light cluster of a vehicle comprises a transparent plastic material.

The camera arrangement may also include image processing means for compensating image distortions introduced by the field of view modifying device. The image processing means may be provided as one or more further algorithms or computer programs in an image processing device coupled to the cameras. For example, the image processing device may enable mapping of an image from a fisheye lens to a single plane. The image processing device may include even further algorithms or programs for combining images captured from two or more cameras to form a composite image, such as a bird's eye view of panoramic view for example.

The transparent pane may be flat or may have a more complex three-dimensional profile. In one embodiment, at least the second surface of the transparent pane is flat or has a three-dimensional profile. The first and second surfaces of the transparent pane may both be flat. In some embodiments, the first and the second surface have the same three-dimensional profile in regions adjacent to the field of view modifying device, in particular in regions adjacent to a field of view modifying device provided as a lens.

A system is also provided which includes at least one camera arrangement according to one of the embodiments previously described and a display for displaying images captured by the camera. The display may be positioned within a vehicle, for example, so that the vehicle driver is able to view the images in the driving position. The captured images may be used to check clearances around the vehicle or to enable the driver to detect objects in the vicinity of the vehicle which he cannot see directly from the driving position. The display may display a composite image from 360° around the vehicle, for example a top view or bird's eye image or a panoramic view. The system may also include an image processing unit for processing images captured by the camera or cameras, for example to produce a combined or composite image.

A vehicle is also provided which includes at least one camera arrangement according to one of previously described embodiments. The transparent pane may be window of the vehicle or a cover of the light cluster of the vehicle. In embodiments in which the transparent pane is the cover of a light cluster of the vehicle, the light cluster may include light wipers. In these embodiments, the light wipers may be used to clean the camera view.

A display for displaying images captured by the camera may be provided in the vehicle so that the vehicle driver is able to view the images in the driving position. The captured images may be used to check clearances around the vehicle or to enable the driver to detect objects in the vicinity of the vehicle which he cannot see directly from the driving position.

The vehicle may also include an image processing unit for processing images captured by the camera or cameras, for example to produce a combined or composite image.

Embodiments will now be described with reference to the accompanying drawings.
- Figure 1: illustrates a vehicle with various camera arrangements.
- Figure 2: illustrates a camera arrangement according to a first embodiment,
- Figure 3: illustrates a camera arrangement according to a second embodiment,
- Figure 4: illustrates a camera arrangement according to a third embodiment,
- Figure 5: illustrates a camera arrangement according to a fourth embodiment.

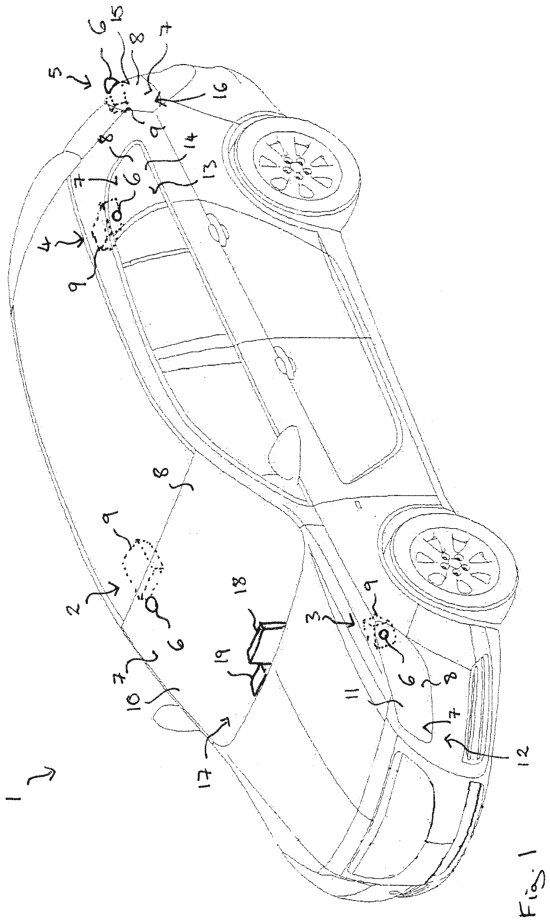

Figure 1 illustrates a vehicle 1 and four camera arrangements 2, 3, 4, 5. Each of the camera arrangements 2, 3, 4, 5 includes a field of view modifying device 6 positioned on or in an outside surface 7 of a transparent pane 8 of the vehicle 1 and a camera 9 positioned on the opposing side of the transparent pane 8.

The camera 9 may be an analogue or a digital camera and may be a video camera capturing images at a number of frames per second.

In a first camera arrangement 2, the field of view modifying device 6 is positioned on the outside surface of the windscreen 10 of the vehicle. The camera 9 is positioned inside the vehicle and captures an image forward of the vehicle 1.

In a second camera arrangement 3, the lens 6 is integral with a cover 11 of a front light cluster 12 of the vehicle 1. The camera 9 may be positioned within the light cluster 12 or may have a lens positioned in or at a rear surface of the light cluster 12 and the remainder of the camera 9 may be positioned within the chassis of the vehicle 1 behind the light cluster 12.

In a third camera arrangement 4, the lens 6 is positioned on the outer surface 13 of a side window 14 of the vehicle 1 and the camera 9 is positioned within the vehicle 1.

In a fourth camera arrangement 5, the lens 6 is positioned on the outside surface 15 of a rear light cluster 16 of the vehicle 1. The camera 9 may be positioned within the light cluster 12 or may have a lens positioned in or at a rear surface of the light cluster 12 and the remainder of the camera 9 may be positioned within the chassis behind the light cluster 12.

The camera arrangements 2, 3, 4, 5 form part of a system 17 including a display 18 and image processing means 19. The image processing means 19 may compensate for distortions introduced by the field of view modifying device 6 and/or may enable the images captured from two or more cameras 9 to be combined to form a composite image, such as a bird's eye view or a panoramic view of the environment around the vehicle 1.

The camera arrangements 2, 3, 4, 5 are examples of positions on the vehicle 1 in which a camera arrangement may be mounted. However, the camera arrangements may be used with any transparent pane within the vehicle. A typical arrangement includes four camera arrangements positioned to capture an image to the front, rear, left and right of the vehicle. The four cameras 9 may each have lens suitable for capturing a complete 360° image from around the vehicle 1 when the images from each of the cameras 9 are combined to form a composite image.

The vehicle 1 is illustrated in Figure 1 as an automobile. However, the vehicle may also be a heavy goods vehicle such as a truck or a bus or may be an industrial vehicle, for example a tractor, a combine harvester, etc. The vehicle may also be a ship, submarine, aeroplane or a helicopter.

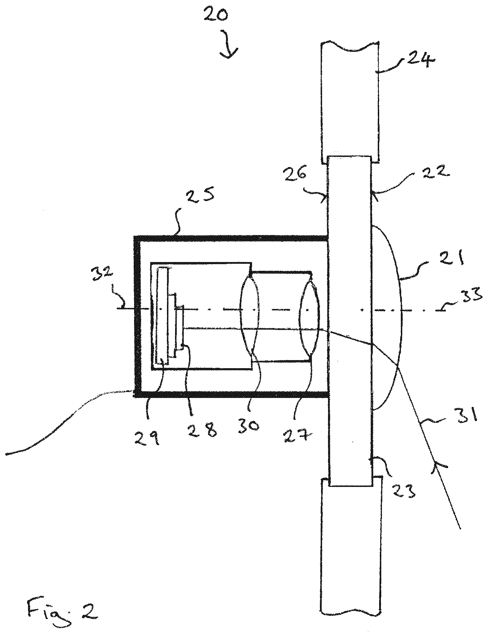

Figure 2 illustrates a camera arrangement 20 according to a first embodiment which may be used on a vehicle or with any object including a transparent pane, such as a window of a building.

The camera arrangement 20 includes a field modifying device in the form of a lens 21 mounted on an outside surface 22 of a transparent pane 23 of an object 24, such as a vehicle. The camera arrangement 20 further includes a camera 25 which is positioned adjacent the opposing surface 26 of the transparent pane 23 such that the transparent pane 23 is arranged between the lens 21 and the camera 25.

The camera 25 may include an objective lens 27, a light-sensitive chip 28, image processing means 29 and, optionally, further lenses 30. However, the camera 25 is not limited to this arrangement. Typically, the camera 25 provides a video image and may be digital or analogue.

The lens 21 may be a wide field of view lens or a fisheye lens which enables light from a hemisphere adjacent the transparent pane 23 to enter the camera 25. Therefore, the camera 25 has a field of view which captures an image from a field of view which is greater than that which would be captured by the camera 25 without use of the lens 21. The camera 25 is positioned within the vehicle 24 so that through holes in the wall of the vehicle 24 for routing cables from the camera outside of the vehicle 24 to a display device within the vehicle 24 are not required.

In Figure 2, a single light ray 31 is illustrated. The light ray 31 is diffracted by the lens 21 before the light ray enters the camera 25. If this diffraction produces additional distortion of the image captured by the camera 25, this distortion may be removed or reduced by suitable processing of the image. The camera 25 has a camera optical axis 32 and the lens 21 has a lens optical axis 33. In this embodiment, the lens optical axis 33 is aligned with the camera optical axis 32. However, the lens optical axis 33 may be arranged eccentric to the camera optical axis 32 in order to enable the camera 25 to capture a desired field of view.

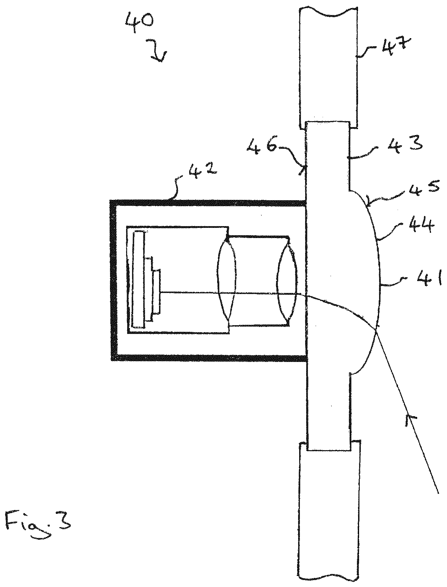

Figure 3 illustrates a camera arrangement 40 according to a second embodiment. The camera arrangement 40 also includes a lens 41 as a field of view modifying device and a camera 42. In this embodiment, the lens 41 is integral with the transparent pane 43 and is provided by a lens shaped portion of the transparent pane 43. In this embodiment, the transparent pane 43 includes a lens shaped protruding region 44 on its outer surface 45. The camera 42 is positioned on the opposing inner surface 46 of the transparent pane 43. The transparent pane 43 may be glass or a plastic material and may be a window or a cover of light cluster of a vehicle 47, for example.

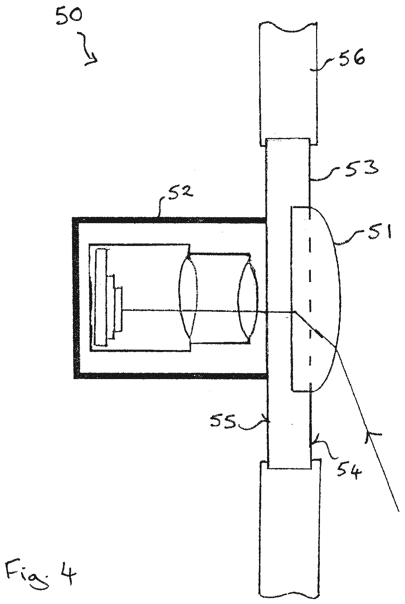

Figure 4 illustrates a camera arrangement 50 according to a third embodiment. The camera arrangement 50 includes a lens 51 as a field of view modifying device and a camera 52. In the camera arrangement 50 of the third embodiment, the lens 51 is integral with a transparent pane 53. The lens 51 is provided as a separate piece which is co-moulded into the transparent pane 53. The lens 51 is comoulded so that it protrudes from the outer surface 54 of the transparent pane 53. The camera 52 is positioned adjacent the opposing inner surface 55 of the transparent pane 53.

For example, the lens 51 may be glass and the transparent pane 53 may be a plastic material. During moulding of the transparent plane 53, the lens 51 may be co-moulded with the plastic material to integrate the lens 51 in the transparent pane 53. This embodiment may be used for integrating a lens into a plastic cover 56 of a light cluster of vehicle, for example.

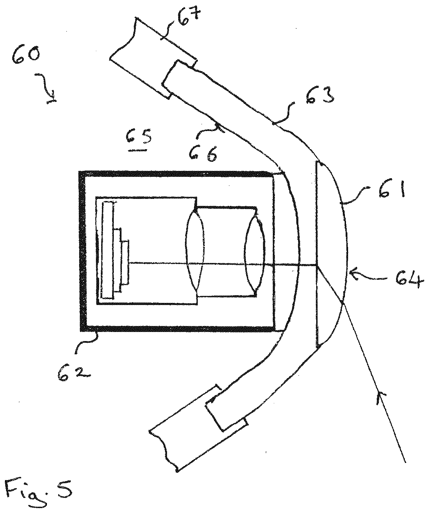

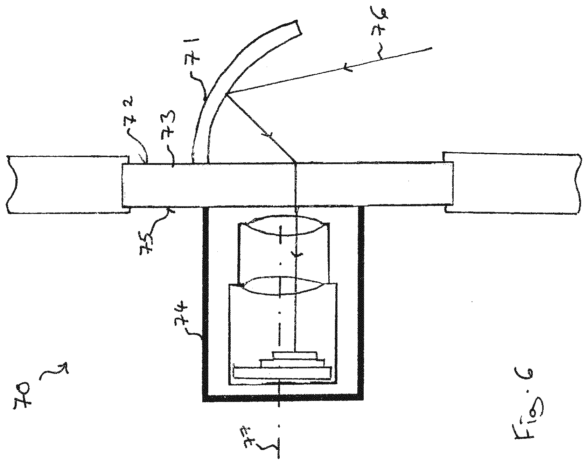

Figure 5 illustrates a camera arrangement 60 according to a fourth embodiment. The camera arrangement 60 includes a field of view modifying device in the form of a lens 61 and a camera 62. The lens 61 is integral with the transparent pane 63 and, in this embodiment is provided as a separate lens 61 which is co-moulded with the transparent pane 63. The transparent pane 63 is, in this embodiment, not flat but has a three-dimensional profile in the form of a cupped-shape or hemisphere in which the lens 61 provides the apex 64.

The camera 62 is positioned within the volume 65 of the cup shape adjacent the opposing side 66 of the transparent pane 63 on which the lens 61 is positioned. The camera arrangement 60 according to the fourth embodiment may be used to mount a camera arrangement within a light cluster 67 of a vehicle, for example, as the cover of light cluster typically has a three-dimensional profile.

The camera arrangements illustrated in figures 2 to 5 may also be used in other applications other than a vehicle. For example, the camera arrangements may be used for a building, in which the transparent pane may be the window of the building. The camera may be mounted within the building and have a field of view which is modified by the field of view modifying device positioned on the outside or within the window pane.

## Claims

1. A camera arrangement (20; 40; 50; 60), comprising:
a camera (25; 42; 52; 62) positioned adjacent a first surface (26; 46; 55; 66) of a transparent pane (23; 43; 53; 63), and
a field of view modifying device (21; 41; 51; 61),
wherein
the field of view modifying device (21) is positioned on a second surface (22) of the transparent pane (23) that opposes the first surface (26) or is integral (41; 51; 61) with the transparent pane (43; 53; 63), **characterized in that**
the field of view modifying device (21; 41; 51; 61) is a lens.

2. The camera arrangement (50; 60) according to claim 1, **characterised in that** the lens (51; 61) is co-moulded in the transparent pane (53; 63).

3. The camera arrangement (40) according to claim 1, **characterised in that** the lens (41) is provided by a protruding portion in the transparent pane (43).

4. The camera arrangement (20; 40; 50; 60) according to one of claims 1 to 3, **characterised in that** the lens (21; 43; 51; 61) is a wide field of view lens.

5. The camera arrangement (20; 40; 50; 60) according to one of claims 1 to 4, **characterised in that** the lens (21; 43; 51; 61) is a fisheye lens.

6. The camera arrangement (20; 40; 50; 60) according to one of claims 1 to 5, **characterised in that** the camera has a camera optical axis (32; 77) field of view modifying device (21; 43; 51; 61) is aligned with or eccentric (71) to the camera optical axis (32; 77).

7. The camera arrangement (20; 40; 50; 60) according to one of claims 1 to 6, **characterised in that** the transparent pane (23; 43; 53; 63) comprises glass or a plastic material.

8. The camera arrangement (20; 40; 50; 60) according to one of claims 1 to 7, further comprising image processing means (19) for compensating image distortions introduced by the field of view modifying device (21; 41; 51; 61).

9. The camera arrangement (20; 40; 50; 60) according to one of claims 1 to 8, **characterised in that** at least the second surface of the transparent pane (23; 43; 53; 63) has a flat or three-dimensional profile.

10. The camera arrangement (20; 40; 50; 60) according to one of claims 1 to 9, **characterised in that** the transparent pane (23; 43; 53; 63) is a window of a vehicle or is a cover of a light cluster of a vehicle or is a window of a building.

11. A system (17), comprising at least one camera arrangement (20; 40; 50; 60) according to one of claims 1 to 10 and a display (18) for displaying images captured by the camera.

12. The system (17) according to claim 11, further comprising an image processing unit (19) for processing images captured by the camera.

13. A vehicle (1), comprising at least one camera arrangement (20; 40; 50; 60) according to one of claims 1 to 10, wherein the transparent pane (23; 43; 53; 63) is a window of the vehicle (1) or is a cover of a light cluster of the vehicle (1).

## Patentansprüche

1. Kameraanordnung (20; 40; 50; 60), umfassend:
eine Kamera (25; 42; 52; 62), positioniert benachbart zu einer ersten Oberfläche (26; 46; 55; 66) einer transparenten Scheibe (23; 43; 53; 63), und
eine sehfeldmodifizierende Vorrichtung (21; 41; 51; 61), wobei
die sehfeldmodifizierende Vorrichtung (21) auf einer zweiten Oberfläche (22) der transparenten Scheibe (23), die der ersten Oberfläche (26) gegenüberliegt, positioniert ist oder einstückig (41; 51; 61) mit der transparenten Scheibe (43; 53; 63) ausgebildet ist, **dadurch gekennzeichnet, dass**
die sehfeldmodifizierende Vorrichtung (21; 41; 51; 61) eine Linse ist.

2. Kameraanordnung (50; 60) nach Anspruch 1, **dadurch gekennzeichnet, dass** die Linse (51; 61) im Verbund in der transparenten Scheibe (53; 63) gegossen ist.

3. Kameraanordnung (40) nach Anspruch 1, **dadurch gekennzeichnet, dass** die Linse (41) durch einen vorspringenden Abschnitt in der transparenten Scheibe (43) vorgesehen ist.

4. Kameraanordnung (20; 40; 50; 60) nach einem der Ansprüche 1 bis 3, **dadurch gekennzeichnet, dass** die Linse (21; 43; 51; 61) eine Linse mit weitem Sehfeld ist.

5. Kameraanordnung (20; 40; 50; 60) nach einem der Ansprüche 1 bis 4, **dadurch gekennzeichnet, dass** die Linse (21; 43; 51; 61) eine Fischaugenlinse ist.

6. Kameraanordnung (20; 40; 50; 60) nach einem der Ansprüche 1 bis 5, **dadurch gekennzeichnet, dass** die Kamera eine optische Kameraachse (32; 77) aufweist und die sehfeldmodifizierende Vorrichtung (21; 43; 51; 61) auf die optische Kameraachse (32; 77) ausgerichtet ist oder exzentrisch (71) zu dieser ist.

7. Kameraanordnung (20; 40; 50; 60) nach einem der Ansprüche 1 bis 6, **dadurch gekennzeichnet, dass** die transparente Scheibe (23; 43; 53; 63) Glas oder ein Kunststoffmaterial umfasst.

8. Kameraanordnung (20; 40; 50; 60) nach einem der Ansprüche 1 bis 7, ferner umfassend Bildverarbeitungsmittel (19) zum Kompensieren von durch die sehfeldmodifizierende Vorrichtung (21; 41; 51; 61) eingebrachten Bildverzerrungen.

9. Kameraanordnung (20; 40; 50; 60) nach einem der Ansprüche 1 bis 8, **dadurch gekennzeichnet, dass** zumindest die zweite Oberfläche der transparenten Scheibe (23; 43; 53; 63) ein flaches oder dreidimensionales Profil aufweist.

10. Kameraanordnung (20; 40; 50; 60) nach einem der Ansprüche 1 bis 9, **dadurch gekennzeichnet, dass** die transparente Scheibe (23; 43; 53; 63) ein Fenster eines Fahrzeugs ist oder eine Abdeckung einer Leuchtengruppe eines Fahrzeugs ist oder ein Fenster eines Gebäudes ist.

11. System (17), umfassend mindestens eine Kameraanordnung (20; 40; 50; 60) nach einem der Ansprüche 1 bis 10 und ein Display (18) zum Anzeigen von durch die Kamera erfassten Bildern.

12. System (17) nach Anspruch 11, ferner umfassend eine Bildverarbeitungseinheit (19) zum Verarbeiten von durch die Kamera erfassten Bildern.

13. Fahrzeug (1), umfassend mindestens eine Kameraanordnung (20; 40; 50; 60) nach einem der Ansprüche 1 bis 10, wobei die transparente Scheibe (23; 43; 53; 63) ein Fenster des Fahrzeugs (1) ist oder eine Abdeckung einer Leuchtengruppe des Fahrzeugs (1) ist.

## Revendications

1. Agencement de caméra (20 ; 40 ; 50 ; 60), comprenant :
une caméra (25 ; 42 ; 52 ; 62) positionnée de façon adjacente à une première surface (26 ; 46 ; 55 ; 66) d'un carreau transparent (23 ; 43 ; 53 ; 63), et
un dispositif de modification du champ de vision (21 ; 41 ; 51 ; 61), dans lequel
le dispositif de modification du champ de vision (21) est positionné sur une deuxième surface (22) du carreau transparent (23) qui est en face de la première surface (26) ou fait corps (41 ; 51 ; 61) avec le carreau transparent (43 ; 53 ; 63), **caractérisé en ce que**
le dispositif de modification du champ de vision (21 ; 41 ; 51 ; 61) est une lentille.

2. Agencement de caméra (50 ; 60) selon la revendication 1,
**caractérisé en ce que** la lentille (51 ; 61) est co-moulée dans le carreau transparent (53 ; 63).

3. Agencement de caméra (40) selon la revendication 1,
**caractérisé en ce que** la lentille (41) est réalisée par une portion en saillie dans le carreau transparent (43).

4. Agencement de caméra (20 ; 40 ; 50 ; 60) selon l'une des revendications 1 à 3, **caractérisé en ce que** la lentille (21 ; 43 ; 51 ; 61) est une lentille à large champ de vision.

5. Agencement de caméra (20 ; 40 ; 50 ; 60) selon l'une des revendications 1 à 4, **caractérisé en ce que** la lentille (21 ; 43 ; 51 ; 61) est une lentille fish-eye.

6. Agencement de caméra (20 ; 40 ; 50 ; 60) selon l'une des revendications 1 à 5, **caractérisé en ce que** la caméra a un axe optique de caméra (32 ; 77) dispositif de modification du champ de vision (21 ; 43 ; 51 ; 61) est aligné avec l'axe optique de caméra (32 ; 77) ou excentré (71) par rapport à celui-ci.

7. Agencement de caméra (20 ; 40 ; 50 ; 60) selon l'une des revendications 1 à 6, **caractérisé en ce que** le carreau transparent (23 ; 43 ; 53 ; 63) est composé de verre ou de matière plastique.

8. Agencement de caméra (20 ; 40 ; 50 ; 60) selon l'une des revendications 1 à 7, comprenant également des moyens de traitement d'images (19) pour compenser des distorsions d'images introduites par le dispositif de modification du champ de vision (21 ; 41 ; 51 ; 61).

9. Agencement de caméra (20 ; 40 ; 50 ; 60) selon l'une des revendications 1 à 8, **caractérisé en ce qu'**au moins la deuxième surface du carreau transparent (23 ; 43 ; 53 ; 63) a un profil plat ou tridimensionnel.

10. Agencement de caméra (20 ; 40 ; 50 ; 60) selon l'une des revendications 1 à 9,
**caractérisé en ce que** le carreau transparent (23 ; 43 ; 53 ; 63) est une fenêtre d'un véhicule ou est un couvercle d'un groupe de feux d'un véhicule ou est une fenêtre d'un bâtiment.

11. Système (17), comprenant au moins un agencement de caméra (20 ; 40 ; 50 ; 60) selon l'une des revendications 1 à 10 et un afficheur (18) pour afficher des images capturées par la caméra.

12. Système (17) selon la revendication 11, comprenant également une unité de traitement d'images (19) pour traiter des images capturées par la caméra.

13. Véhicule (1), comprenant au moins un agencement de caméra (20 ; 40 ; 50 ; 60) selon l'une des revendications 1 à 10, dans lequel le carreau transparent (23 ; 43 ; 53 ; 63) est une fenêtre du véhicule (1) ou est un couvercle d'un groupe de feux du véhicule (1).
